# EUROPEAN PATENT APPLICATION

(11) **EP 2 337 309 A1**
(43) Date of publication of application: **22.06.2011**
(21) Application number: 10194602.8
(22) Date of filing: 10.12.2010
(51) Int. Cl.: H04L 29/08, H04W 4/02, H04W 64/00

(54) **Determining mode of transport by monitoring geographic locations of mobile electronic device**

(30) Priority: 16.12.2009 EP 09179381; 16.12.2009 EP 09179383
(71) Applicant: Koninklijke KPN N.V., 2516 CK The Hague (NL)
(72) Inventor: Alberts, Albert, 9751 TC, Haren (NL); Steenbergen, van, Ate, 9737 NN, Groningen (NL)

(57) **Abstract**

The current mode of transport of a mobile electronic device is determined on the basis of a current geographic location (102) and a current velocity (104) of the mobile electronic device. The current mode of transport (112) is used to select a service (114) for providing information to the user of the mobile electronic device (202).

## Description

### FIELD OF THE INVENTION

The invention relates to a method of determining a specific one of multiple modes of transport used by a user of a mobile electronic device while travelling. The invention further relates to a mobile electronic device, and to control software on a computer-readable medium.

### BACKGROUND ART

The expression "location-based service" is well known and is used herein to refer to an information service that is provided via a user interface of the mobile electronic device to a user of the mobile electronic device. The information service provides the information under control of the current geographic location of the mobile electronic device.

For example, the mobile electronic device comprises a mobile electronic device, and the information service is provided via a mobile network (or: cellular network) to the mobile electronic device. Examples of a mobile electronic device are a mobile telephone, a smartphone, a personal navigation device with a network interface, a personal digital assistant (PDA) with a network interface, etc. The current geographic location of a mobile electronic device can be determined in a variety of manners. For example, the mobile electronic device has onboard global positioning system (GPS) functionality. As known, the GPS is a global navigation satellite system that provides positioning services, navigation services and timing services to users worldwide. The mobile electronic device itself determines its current geographic location, or a sequence of its recent geographic locations. The mobile electronic device communicates its current geographic location or the sequence of its recent geographic locations via the mobile network to a dedicated server configured for supplying the location-based service via the mobile network. Alternatively, the geographic location of the mobile electronic device is determined by e.g., GSM localization (mobile telephone tracking) or via control plane locating, each of which being a technology well known in the art.

As another example, the mobile electronic device has onboard global positioning system (GPS) functionality. As known, the GPS is a global navigation satellite system that provides positioning services, navigation services and timing services to users worldwide. The mobile electronic device itself determines its current geographic location, or a sequence of its recent geographic locations. The information provided to the user via the user interface is then retrieved, under control of the current geographic location, from an onboard memory storing the information. An autonomous personal navigation device is an example of such a mobile electronic device.

### SUMMARY OF THE INVENTION

The inventors propose to provide a service to a user of a mobile electronic device while the user is travelling or on the move, based on the geographic location of the mobile electronic device. The service is selected under control of the manner wherein the user is travelling.

The inventors therefore propose a method of determining a specific one of multiple modes of transport used by a user of a mobile electronic device while travelling. The method comprises: determining a geographic location of the mobile electronic device; determining a velocity of the mobile electronic device associated with the geographic location; and identifying the specific mode of transport under control of the geographic location and the velocity.

The mobile electronic device may have an onboard navigational aid (e.g., GPS equipment, accelerometers, etc) for determining its geographic location and its velocity, and an onboard data processing system configured for determining the specific mode of transport given the current geographic location and the velocity. Alternatively, the mobile electronic device comprises a mobile communication device, e.g., a mobile telephone, with an interface to a mobile network, and the network operator determines the geographic location and velocity of the mobile electronic device, e.g., through GSM localization or control plane locating, and then determines the specific mode of transport. Alternatively, the mobile electronic device comprises a navigational aid, as well as a mobile communication device with an interface to a mobile network. The mobile electronic device communicates data, representative of the current geographic location and of the velocity, via the mobile network to the service provider, and the service provider determines the specific mode of transport.

The inventors have realized that the combination of the current geographic location and the current velocity of the mobile electronic device can be used to determine the mode of transport of the user. Examples of a mode of transport are: air transport such as aviation; cycling; walking; ship transport such as sailing or ferrying; inland shipping (or: canal shipping); rail transport such as a by train or streetcar; road transport such as by automobile, truck or bus. The geographic location and the velocity (whether only speed or both speed and a direction) together enable to discriminate between different modes of transport. The geographic location, or a sequence of geographic locations captured briefly one after another for determining the velocity, enables to identify a feature on a geographic map, e.g., a railroad track, a lake, a river, a bicycle lane, a footpath or sidewalk or trail, a highway or expressway, etc. The speed is a further lead on the mode of transport and enables to distinguish between, e.g., walking, bicycling, driving a car, riding on a train, flying on an airliner.

In a further embodiment of the method, the identifying of the specific mode of transport comprises: selecting (e.g., from a database), or otherwise determining, a first map of a geographic region that contains the geographic location; and associating the geographic location and the velocity with a particular one of a plurality of first features on the first map, the particular first feature having an attribute being characteristic of the specific mode of transport.

For example, the geographic location coincides, according to the map, with a spot on a footpath in a hiking area. The first feature is then a route on the first map and the route has an attribute identifying the route as a footpath. The determined velocity indicates a progress of 4 km/h in a direction north-north-east. A conclusion may then be drawn that the user of the mobile electronic device is travelling on foot in the hiking area.

As another example, the geographic location coincides, according to the map, with a spot on an expressway. The first feature is then a route on the first map and the route has an attribute identifying the route as an expressway. The velocity determined indicates a progress of 5 km/h. A conclusion may then be drawn that the user of the mobile electronic device is sitting in his/her car in a traffic jam. The service provider may check, in addition, whether it is likely that there actually is a traffic jam, e.g., by consulting traffic forecasts or monitoring traffic information messages.

As yet another example, the geographic location coincides, according to the map, with a sidewalk along a shopping street in a city. The first feature is then a route on the first map and the route has an attribute identifying the route as a sidewalk. The velocity indicates a progress of 2 km/h due north. A conclusion may then be drawn that the user is strolling along the street, doing some window-shopping.

As still another example, the geographic location coincides, according to the map, with a spot on a country road between a first village and a second village. The first feature is then a route on the first map and the route has an attribute identifying the route as a country road. The determined velocity indicates a progress of 70 km/h, parallel to the road at the geographic location determined, and towards the second village. A conclusion may be drawn that the user is driving along in his/her motorized vehicle, e.g., an automobile or a motorcycle, on this country road, currently towards the second village. Alternatively, the determined velocity indicates a progress of 15 km/h, parallel to the road at the geographic location determined, and towards the second village. A conclusion may be drawn that the user is pedaling along on his/her bicycle on this country road, currently towards the second village. Alternatively, the determined velocity indicates a progress of 5 km/h, parallel to the road at the geographic location determined, and towards the second village. A conclusion may be drawn that the user is walking along this country road, currently towards the second village.

As still another example, the geographic location coincides, according to the map, with a spot on a railroad track between a first city and a second city. The first feature is then a route on the first map and the route has an attribute identifying the route as a railroad track. The velocity determined indicates a progress of 140km/h parallel to the tracks at the geographic location determined and towards the second city. A conclusion may then be drawn that the user is on a train that is speeding towards the second city.

Note that the attribute of the first feature indicates a type of route. Each type of route is typically suitable for one or more specific modes of transport. As indicated above, the attribute "railroad track" merits drawing the conclusion that the specific mode of transport is: riding on a train. The attribute "expressway" merits drawing the conclusion that the specific mode of transport is: riding or driving a motorized vehicle, such as an automobile, a truck, a bus, a motorcycle, a trike, etc. The attribute "country road", however, indicates that a variety of different modes of transport may be associated with this route: pedestrians, equestrians, ostrichians (riders of ostriches), bicyclists, drivers of motorized vehicles, etc. The velocity of the mobile electronic device, carried by the traveling user, may then assist in determining the specific mode of transport.

The specific mode of transport thus determined controls the specific context of the user. This context can subsequently be used, e.g., by a service provider, in order to provide a specific one of multiple services to a user of a mobile electronic device while travelling. The specific service provided is tailored to this specific context in the sense that it is the object of the specific service to cater to the expected needs of the user in view of his/her specific mode of transport. The service is implemented and provided by resources onboard the mobile electronic device. Alternatively, if the mobile electronic device comprises a mobile electronic device with an interface to a mobile network, the service is provided by a service provider to the mobile electronic device via the mobile network.

More specifically, the inventors also propose a method of providing a specific one of multiple services to a user of a mobile electronic device while travelling. The mobile electronic device comprises a mobile communication device with an interface to a mobile network. The method comprises: determining a specific one of multiple modes of transport being used by the user, wherein the determining comprises tracking, or otherwise monitoring, a geographic location of the mobile communication device, or tracking, or otherwise monitoring, the geographic location and a velocity of the mobile communication device; selecting the specific one of the multiple services in dependence on the specific mode of transport; and providing the specific one of the multiple services to the mobile electronic device via the mobile network.

For example, the determining of the specific mode of transport comprises: determining a geographic location of the mobile electronic device; determining a velocity of the mobile electronic device associated with the geographic location; and identifying the specific mode of transport under control of the geographic location and the velocity. The geographic location and/or the velocity may have been determined by the mobile electronic device and may then be communicated to the service provider. Alternatively, the geographic location and/or velocity may be determined by a source external to the mobile electronic device, based on monitoring the geographic location of the mobile electronic device. Examples of such sources are the mobile network operator and the service provider. Similarly, the specific mode of transport may be identified by the mobile electronic device itself, based on the geographic location and velocity determined by the mobile electronic device, and then communicated to the service provider via the mobile network. Alternatively, the service provider itself determined the specific mode of transport based on tracking, or otherwise monitoring, the geographic locations assumed by the mobile electronic device over a certain time.

The identifying the specific mode of transport may comprise: selecting (e.g., from a database), or otherwise determining, a first map of a geographic region that contains the geographic location; and associating the geographic location and the velocity with a particular one of a plurality of first features on the first map, the particular first feature having an attribute being characteristic of the specific mode of transport.

In an embodiment of the method of providing a specific service, the mobile electronic device has a graphical user interface. The specific one of the multiple services comprises: determining a second map of the geographic region under control of the specific mode of transport; and supplying data, e.g., via the mobile network, for enabling the mobile electronic device to display at least a part of the second map in the graphical user interface.

The first map, introduced above, is used to determine the user's specific mode of transport by means of correlating the user's geographic location and velocity with a first feature on the first map. Examples of the first feature have been given above.

The second map is intended as a navigational aid to the user of the mobile electronic device. For example, the data supplied by the specific service comprises an electronic file of the second map. Alternatively, the data supplied by the specific service comprises a pointer to a particular server, accessible to the mobile electronic device via the mobile network. The mobile electronic device is configured for using the pointer to contact the particular server for thereupon retrieving an electronic file representative of the second map. Alternatively, the mobile electronic device comprises a storage that stores a collection of geographic maps. The data supplied by the specific service is operative to identify a relevant one of the geographic maps in the storage, e.g., based on the geographic location of the mobile electronic device, and to control the displaying of the relevant one of the collection of geographic maps as the second map.

In a further embodiment, at least one of the velocity and the specific mode of transport determines at least one of: a resolution of the second map; a scale of the second map; the part of the second map being displayed; a plurality of second features on the map, each respective one of the plurality of second features being relevant to the specific mode of transport; and an extent of the geographic region covered by the second map.

For example, if the user is travelling at a low speed, he/she will cover a shorter distance in a given time period than if he/she were travelling at a high speed. The low speed may be typical of the specific mode of transport, e.g., walking or bicycling, or may not be typical of the specific mode of transport, e.g., slowly driving on the expressway owing to a traffic jam, or riding on a passenger train that has to stay behind a slower freight train on the same track. The scenery as perceived by the user will therefore change more slowly than usual. The resolution, scale and extent of the geographic region covered by the second map may therefore be adapted to the slower speed of travelling, given the specific mode of transport.

As another example, consider a first user and a second user. Assume that it has been determined that the specific mode of transport of the first user is walking to the east on a particular footpath in a hiking area. It is then likely, that the following second features are relevant to this first user: the course of the footpath for the next mile; intersections with other footpaths over the next mile; forks in the footpath over the next mile; fords on the trail (places where a river or a brook is shallow enough to be crossed by wading), resting areas, brooks, markers along the footpath; peculiar vegetation along the footpath; vantage points within range of the current footpath; taps along the footpath supplying potable water, etc. Assume that it has been determined that the specific mode of transport of the second user is driving along a country road in the same hiking area. It is then likely, that the following second features are relevant to this second user: the course of the country road for the next ten miles, intersections with roads over the next ten miles, forks in the country road over the next ten miles; bridges, narrowing of the road, restaurants, gas stations, historic buildings, road signs, vantage points, etc., all within range of the country road over the next ten miles, etc.

Accordingly, the second features on the second map displayed to the first user, i.e., the second features that are relevant to hiking, are different from the second features on the second map displayed to the second user, i.e., the second features that are relevant to a driver.

In a further embodiment, the specific one of the multiple services is selected also in dependence on at least one of: a personal profile registered for the user; a time of the day of the travelling; a day of the week of the travelling; a calendar of scheduled events in a geographic region containing the geographic location; current conditions in the geographic region relevant to the specific mode of transport; and a forecast of the weather applicable to the geographic region. These and other criterions assist in selecting relevant information to be presented to the user of the mobile electronic device in view of his/her geographic location and specific mode of transport. The criterions for assisting in the selecting of the relevant information to be presented may be derived from, e.g., a rule base at the service provider, storing rules to be applied when catering to this user. For example, the user may have registered with the service provider, who carries out above method, and the user may have supplied his/her user profile to the service provider at registering. Alternatively, the mobile electronic device itself has such a rule base onboard, e.g., configured by the user in a configuration mode of the mobile electronic device, or downloaded from the service provider to the mobile electronic device, etc. Alternatively, a combination can be used of first criterions, represented by first rules in a first rule base of the service provider, and second criterions, represented by second rules in a second rule base at the mobile electronic device. Privacy-sensitive criterions can therefore be held private in the second rule base at the mobile electronic device.

For example, the user may have specified in his/her user profile that he/she is interested in electric guitars and water polo (in disjoint timeslots). Assume that the specific service to this user comprises supplying geographical map data via the mobile network. The geographical map data may include a complete electronic file of the second map for display in the graphical user interface of the user's mobile electronic device. Alternatively, the mobile electronic device comprises a storage storing a variety of second maps, and the specific service comprises supplying data for identifying and controlling the displaying of the relevant one of the second maps. The data may include, in addition, further data that is representative of, for example, geographic locations and brief descriptions of music shops or guitar-related enterprises within range of the user's current geographic location, or that is representative of local sports clothing stores that have specialized in reinforced swimming gear, targeted advertisements, etc.

As another example, the current conditions in the geographic region that are relevant to the specific mode of transport being hiking, include the current weather conditions, whether or not the hiking trail is currently traversable in view of recent forest fires, mud slides or rain storms, whether or not there has been a warning issued regarding a sighting of a mountain lion in the hiking area, etc. The current conditions in the geographic region that are relevant to the specific mode of transport being automobile transport, include the poor condition of the road surface ahead, local flooding of the road ahead, a protest march, a parade or a fair being held that blocks the road ahead, a manhunt going on in the geographic region, conducted by law enforcement officers going after an escaped convict, etc.

The above method of determining a specific one of multiple modes of transport, used by a user of a mobile electronic device while traveling, can be made a part of the above method of providing a specific one of multiple services to a user of a mobile electronic device while travelling. Alternatively, the method of determining a specific one of multiple modes of transport can be carried out by a first service provider, whereas the method of providing a specific one of multiple services to a user of a mobile electronic device based on the user's specific mode of transport can be carried out by a second service provider, using as input the specific mode of transport as determined by the first service provider for the mobile electronic device. In this sense, the first service provider enables the second service provider to provide the specific one of multiple services to a user of a mobile electronic device.

The invention also relates to a mobile electronic device comprising: a navigation module configured for determining a geographic location of the mobile electronic device; and a data processing system connected to the navigation module. The data processing system is configured for determining a velocity of the mobile electronic device associated with the geographic location, and for determining, under control of the geographic location and the velocity, a specific one of multiple modes of transport being used by a user of the mobile electronic device. The data processing system receives from the navigation module data representative of the current geographic location, and the data processing system may have been configured to determine the velocity based on the data representative of two or more most recent ones of the geographical locations determined by the navigation module. Alternatively, the data processing system also receives data from the navigation module that is representative of the velocity.

An embodiment of the mobile electronic device comprises a memory for storing data representative of a first map of a geographic region containing the geographic location. The memory is connected to the data processing system. The determining of the specific mode of transport comprises: accessing the first map; and associating the geographic location and the velocity with a particular one of a plurality of first features on the first map, the particular first feature having an attribute being characteristic of the specific mode of transport. The mobile electronic device of this embodiment represents an autonomous device with respect to the task of determining the specific mode of transport.

Another embodiment of the mobile electronic device comprises a mobile communication device with an interface to a mobile network. The interface is connected to the data processing system. The determining of the specific mode of transport comprises: submitting, to a server and via the mobile network, a request for returning to the mobile electronic device data representative of the specific mode of transport, the request comprising further data representative of the geographic location and of the velocity. In this other embodiment, the mobile electronic device has both a navigation module as well as a mobile communication device. The determining of the specific mode of transport is now delegated to a remote server, based on the geographic location and velocity determined by the navigation module.

The invention also relates to a mobile electronic device comprising: a memory storing a plurality of sets of instructions; a user interface and a data processing system connected to the user interface and to the memory. The data processing system is configured for: determining a specific one of multiple modes of transport being used by a user of the mobile electronic device; selecting for executing a specific one of the plurality of the sets of instructions in dependence on the specific mode of transport; contacting a specific information source under control of the specific set of instructions; receiving data from the specific information source under control of the specific set of instructions, the data being representative of information relevant to the user in view of the specific mode of transport; and providing the information to the user via the user interface and under control of the specific set of instructions.

For example, the data processing system is configured for determining a geographic location of the mobile electronic device, and for determining a velocity of the mobile electronic device associated with the geographic location. The data processing system may determine the geographic location and/or the velocity by receiving data from a navigation module onboard the mobile electronic device, the data being representative of the geographic location and/or the velocity. Alternatively, the mobile electronic device comprises a mobile communication device with an interface for access to a mobile network. The data processing system may then receive this data, via the mobile network, from a service provider or another monitoring agency, who is monitoring the geographic location of the mobile electronic device.

Similarly, the data processing system may itself determine the specific mode of transport, under control of the geographic location and the velocity. Alternatively, the mobile electronic device has a mobile communication device with an interface to a mobile network. The service provider is monitoring the mobile electronic device for determining the geographical location and the velocity, or the service provider receives data from the mobile electronic device, via the mobile network, the data being representative of the geographic location and the velocity. The service provider may then himself determine the specific mode of transport, based on the geographic location and the velocity of the mobile electronic device. The service provider communicates further data to the mobile electronic device, via the mobile network, wherein the further data is representative of the specific mode of transport as determined by the service provider.

As specified earlier, the specific mode of transport may be determined, by the mobile electronic device or by the service provider, by means of determining a first map of a geographic region that contains the geographic location, and associating the geographic location and the velocity with a particular one of a plurality of first features on the first map, the particular first feature having an attribute being characteristic of the specific mode of transport.

In an embodiment of the mobile electronic device of the invention, the mobile electronic device has an interface to a mobile network. The specific information source comprises a specific server accessible from the mobile electronic device via the mobile network. The contacting of the specific information source comprises contacting the specific server via the mobile network. The receiving of the data from the specific information source comprises receiving the data from the specific server via the mobile network.

The mobile electronic device contacts a specific server via the mobile network. For example, the mobile electronic device comprises a look-up table that lists one or more servers per individual one of the multiple modes of transport, or that lists one or more web pages at a specific server per individual one of the multiple modes of transport. There is a pre-determined one-to-one relationship between a particular mode of transport and a particular server, or between the particular mode of transport and a particular one of multiple web pages at a specific server. The specific server or the specific web page at the specific server provides information that is associated with the specific mode of transport, e.g., topographic maps, road maps, maps of a railroad network, hiking maps; traffic information, weather information, information about restaurants, hotels, gas stations, rest areas, scheduled events, attractions, places of interest, etc. This information is retrieved or otherwise received by the mobile electronic device via the mobile network for being provided to the user via the user interface, e.g., a display monitor or a loudspeaker.

In another embodiment of the mobile electronic device of the invention, the specific information source comprises an information storage local at the mobile electronic device. The contacting of the specific information source comprises accessing the information storage. The retrieving of the data from the specific information source comprises retrieving the data from the information storage.

For example, this other embodiment of the mobile electronic device has an onboard storage of second maps, e.g., geographic maps, road maps, maps of a railroad network, hiking maps, etc. Under control of the specific mode of transport, the mobile electronic device retrieves from its local storage a specific one of the second maps relevant to the current geographic location of the mobile electronic device.

If the mobile electronic device also has a mobile communication device with an interface to a mobile network, the mobile electronic device may then contact a specific server, in dependence on the specific mode of transport, for retrieving data representative of information relevant to the specific mode of transport and to the geographic region that includes the geographic location. The information thus retrieved may be combined with the second map in the display monitor of the mobile electronic device.

Alternatively, the information storage at the mobile electronic device stores all the information relevant to the specific mode of transport and to the geographic region that includes the geographic location. The mobile electronic device provides this information on the display monitor, e.g., as an overlay over the specific second map displayed in the display monitor. Instead of an overlay, the information is provided in a separate window (i.e., in a display rectangle) in the graphical user interface.

In the alternative implementation, the information storage at the mobile electronic device stores all the information relevant to the specific mode of transport and to the geographic region that includes the geographic location. This alternative implementation operates, in principle, autonomously and independently of any server. Of course, the information stored in the local storage may be updated by connecting the mobile electronic device, or the storage, to a server of a service provider for downloading the updates.

The invention also relates to control software on a computer-readable medium, e.g., on a USB-stick, a smart-card or another semiconductor device, on an optical data carrier, on a magnetic data carrier, etc. The control software is configured for being installed on a mobile electronic device, e.g., a PDA, a smartphone, a palmtop personal computer, a mobile telephone, a personal navigation device, etc. The mobile electronic device comprises: a navigation module configured for determining a geographic location of the mobile communication device, and a data processing system connected to the navigation module. The control software has first instructions that, when executed on the data processing system, is operative to control determining a velocity of the mobile communication device associated with the geographic location, and determining, under control of the geographic location and the velocity, a specific one of multiple modes of transport, being used by a user of the mobile electronic device.

The determining of the velocity of the mobile electronic device may have been performed by the navigation module, and the first instructions control the receiving of data, representative of the velocity, from the navigation module by the data processing system. Alternatively, the first instructions control the calculating of the velocity, by the data processing system, based on the data, representative of the most recent geographic locations, received from the navigation module.

An embodiment of the control software, configured for being installed at the mobile electronic device, comprises second instructions for control of determining a first map of a geographic region that contains the geographic location; and third instructions for control of associating the geographic location and the velocity with a particular one of a plurality of first features on the first map, the particular first feature having an attribute being characteristic of the specific mode of transport.

For example, the mobile electronic device comprises a memory connected to the data processing system and storing data, representative of the first map comprising the first features. The second instructions then control accessing the memory for retrieval of the first map, and the third instructions control the data processing system to find the particular feature. As another example, the mobile electronic device comprises a mobile communication device with an interface to a mobile network. The second instructions control receiving the first map from a server via the mobile network, and the third instructions control the data processing system to find the particular feature.

In another embodiment of the control software, configured for being installed at the mobile electronic device, the mobile electronic device has a mobile communication device with an interface to a mobile network. The interface is connected to the data processing system. The control software comprises fourth instructions for control of determining the specific mode of transport. The fourth instructions control submitting, to a server and via the mobile network, a request for returning to the mobile electronic device, via the mobile network, data representative of the specific mode of transport. The request submitted by the mobile electronic device comprises further data representative of the geographic location and of the velocity.

The invention also relates to control software on a computer-readable medium, e.g., on a USB-stick, a smart-card or another semiconductor device, on an optical data carrier, on a magnetic data carrier, etc. The control software is configured for being installed on a mobile electronic device, e.g., a PDA, a smartphone, a palmtop personal computer, a mobile telephone, a personal navigation device, etc. The mobile electronic device comprises a data processing system connected to the user interface. The control software has a first set of instructions and a plurality of further sets of instructions. The first set of instructions, when executed on the data processing system, is operative to control: determining a geographic location of the mobile electronic device; determining a velocity of the mobile electronic device associated with the geographic location; determining, under control of the geographic location and the velocity, a specific one of multiple modes of transport, being used by a user of the mobile electronic device; selecting for executing a specific one of the plurality of further sets of instructions in dependence on the specific mode of transport; contacting a specific information source under control of the specific set of instructions; receiving data from the specific information source under control of the specific set of instructions, the data being representative of information relevant to the user in view of the specific mode of transport; and providing the information to the user via the user interface and under control of the specific set of instructions.

The control software may determine the geographic location and/or the velocity by controlling the data processing system to receive data from a navigation module onboard the mobile electronic device, the data being representative of the geographic location and/or the velocity. Alternatively, the mobile electronic device comprises a mobile communication device with an interface for access to a mobile network. The control software may then control the data processing system to receive the data, via the mobile network, from a service provider or another monitoring agency who is monitoring the sequence of geographic locations of the mobile electronic device. Similarly, the control software may control the data processing system to determine the specific mode of transport by means of processing the data indicative of the geographic location and the velocity. Alternatively, the mobile electronic device comprises a mobile communication device with an interface to a mobile network. The control software may then control the data processing system to submit a request via the mobile network to a server. The request comprises data representative of the geographic location and the velocity of the mobile electronic device. The server then returns via the mobile network further data representative of the specific mode of transport, determined on the basis of the geographic location and the velocity.

Installing such control software on a mobile electronic device enables the mobile electronic device to participate in the method of identifying the specific mode of transport and in the method of providing a service to the user, as specified above.

In an embodiment of the control software, configured for installing on the mobile electronic device, the mobile electronic device comprises a mobile communication device with an interface to a mobile network. The specific information source comprises a specific server accessible from the mobile electronic device via the mobile network. The contacting of the specific information source comprises contacting the specific server via the mobile network; and the receiving of the data from the specific information source comprises receiving the data from the specific server via the mobile network.

In another embodiment of the control software, configured for being installed on a mobile electronic device, the specific information source comprises an information storage at the mobile electronic device. The contacting of the specific information source comprises accessing the information storage. The retrieving of the data from the specific information source comprises retrieving the data from the information storage.

The invention also relates to control software on a computer-readable medium, the control software being configured for installing on a computer, e.g., a server, to implement a method of determining a specific one of multiple modes of transport used by a user of a mobile electronic device while travelling. The mobile electronic device comprises a mobile communication device with an interface to a mobile network. The control software comprises: first instructions for determining a geographic location of the mobile electronic device; second instructions for determining a velocity of the mobile electronic device associated with the geographic location; and third instructions for identifying the specific mode of transport under control of the geographic location and the velocity.

The determining of the geographic location and the velocity may be implemented by means of tracking the geographic location of the mobile electronic device. Alternatively, the mobile electronic device also has an onboard navigation module, and a data processing system and a navigation module, for determining the geographic location and the velocity. The determining, by the server, of the geographic location and the velocity then comprises receiving via the mobile network data from the mobile electronic device that is representative of the geographic location and of the velocity. Alternatively, the service provider receives from another party, e.g., the mobile network operator, data representative of the geographic location and of the velocity of the mobile electronic device generated through, e.g., tracking.

In a further embodiment of the control software, configured for being installed at a server, the third instructions comprise: fourth instructions for accessing a first map of a geographic region that contains the geographic location; and fifth instructions for associating the geographic location and the velocity with a particular one of a plurality of first features on the first map, the particular first feature having an attribute being characteristic of the specific mode of transport.

The invention further relates to control software on a computer-readable medium, the control software being configured for installing on a computer, e.g., a server, to implement a method of providing a specific one of multiple services to a user of a mobile electronic device while travelling. The mobile electronic device comprises a mobile communication device with an interface to a mobile network. The control software comprises: first instructions for determining a specific one of multiple modes of transport being used by the user, using monitoring of the mobile electronic device; second instructions for selecting the specific one of the multiple services in dependence on the specific mode of transport; and third instructions for providing the specific one of the multiple services to the mobile electronic device via a mobile network.

In an embodiment of the control software, configured for installing on a server, the first instructions comprise: fourth instructions for determining a geographic location of the mobile electronic device; fifth instructions for determining a velocity of the mobile electronic device associated with the geographic location; and sixth instructions for identifying the specific mode of transport under control of the geographic location and the velocity. The determining of the geographic location and the velocity may be implemented by means of tracking the geographic location of the mobile electronic device. Alternatively, the mobile electronic device also has an onboard navigation module, and a data processing system and a navigation module, for determining the geographic location and the velocity. The determining, by the server, of the geographic location and the velocity then comprises receiving via the mobile network data from the mobile electronic device that is representative of the geographic location and of the velocity. Alternatively, the service provider receives from another party, e.g., the mobile network operator, data representative of the geographic location and of the velocity of the mobile electronic device generated through, e.g., tracking.

Similarly, the identifying the specific mode of transport under control of the geographic location and the velocity may be implemented by the mobile electronic device or by the operator of the mobile network. The mobile electronic device or the mobile network operator then communicates to the server data representative of the specific mode of transport, and the server receives this data. Alternatively, the server determines the specific mode of transport based on the information received about the geographic location and the velocity.

In a further embodiment of the control software, configured for being installed on a server, the sixth instructions comprise: seventh instructions for determining a first map of a geographic region that contains the geographic location; and eighth instructions for associating the geographic location and the velocity with a particular one of a plurality of first features on the first map, the particular first feature having an attribute being characteristic of the specific mode of transport.

In a further embodiment of the control software, configured for being installed on a server, the mobile electronic device has a graphical user interface. The third instructions comprise: ninth instructions for determining a second map of the geographic region under control of the specific mode of transport; and tenth instructions for supplying data via the mobile network to the mobile electronic device, for enabling the mobile electronic device to display at least a part of the second map in the graphical user interface. For example, the data supplied to the electronic device comprises an electronic file of the second map or a part thereof. Alternatively, the mobile electronic device has an onboard memory that stores an electronic file of the second map. The data supplied to the mobile electronic device then determine the retrieval of the second map, or part thereof, for displaying in the graphical user interface.

In a further embodiment of the control software, configured for being installed on a server, at least one of: the velocity and the specific mode of transport determines at least one of: a resolution of the second map; a scale of the second map; the part of the second map; a plurality of second features on the part of the second map being displayed, each respective one of the plurality of second features being relevant to the specific mode of transport; and an extent of the geographic region covered by the second map.

In a further embodiment of the control software, configured for being installed on a server, the specific one of the multiple services is selected also in dependence on at least one of: a personal profile registered for the user; a time of the day of the travelling; a day of the week of the travelling; a calendar of scheduled events in a geographic region containing the geographic location; current conditions in the geographic region relevant to the specific mode of transport; and a forecast of the weather applicable to the geographic region.

### BRIEF DESCRIPTION OF THE DRAWING

The invention is explained in further detail, by way of example and with reference to the accompanying drawing, wherein:
Fig.1 is a flow diagram illustrating an example of a process in the method of the invention; and
Figs. 2, 3 and 4 are diagrams of systems exploiting the method of the invention.

Throughout the Figures, similar or corresponding features are indicated by same reference numerals.

### DETAILED EMBODIMENTS

Briefly, an embodiment of the invention relates to the following. The current geographic location and current velocity of a mobile electronic device is used to determine the current mode of transport of the mobile electronic device. A service is selected under control of the current mode of transport for providing information to the user, via his/her mobile electronic device, the information being relevant to the user in view of the current mode of transport.

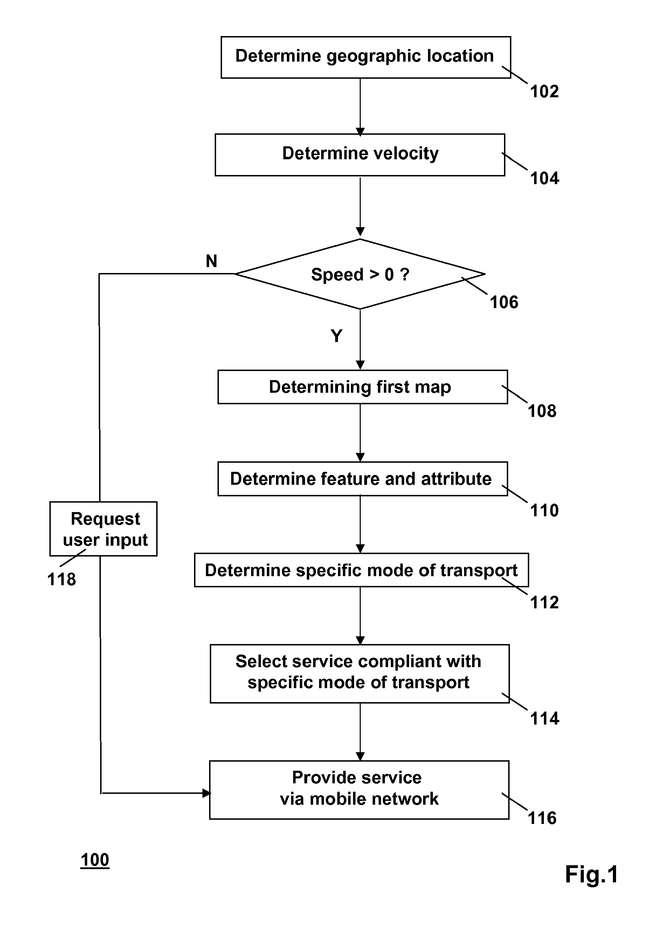

Fig.1 is a diagram 100 illustrating an example of a process in the method of the invention of providing a specific one of multiple services to a user of a mobile electronic device, e.g., a mobile telephone, while travelling.

In a first step 102 a geographic location of the mobile telephone is determined. Technologies that enable to determine the geographic location of a mobile telephone are known in the art, as mentioned above, e.g., GSM localization. The geographic location may be determined repeatedly at different moments, for example, once every minute, or two or more times within a short time interval, e.g., a few seconds, that is repeated after a longer period of time, e.g., once every 30 seconds.

In a second step 104 a velocity is determined of the mobile electronic device. The velocity is associated with the geographic location determined in the first step 102. The velocity may be determined by a rate of change of the geographic locations determined in the first step 102, or by an average of the rates of change of geographic locations determined from a sequence of three or more geographic locations, etc.

Alternatively, the mobile telephone may have an onboard navigation module that determines the current geographic location, or the current geographic location and the velocity. The mobile telephone may then communicate this data to the service provider via a mobile network and the Internet. The first step 102 and the second step 104 may then comprise receiving from the mobile telephone, via a mobile network and the Internet, the data representative of the current geographic location and further data representative of the velocity, respectively.

In a third step 106, it is determined if the magnitude of the velocity determined in the second step 104, i.e., the speed, is larger than zero.

If the speed is larger than zero, the process continues with a fourth step 108.

In the fourth step 108, a first geographic map is selected under control of the geographic location determined in the first step 102, or under control of both the geographic location determined in the first step 102 and the velocity determined in the second step 104. For example, if the velocity determined in the second step 104 is relatively low, the selected first geographic map covers a larger geographic area and has a lower resolution than in case the velocity determined in the second step 104 has a relatively high magnitude. The selected first geographic map includes the geographic location determined in the first step 102.

In a fifth step 110, the one or more geographic locations determined in the first step 102 are associated with a first feature of the first geographic map determined in the fourth step 108. Examples of first features are: a railroad track, a lake, a footpath, a trail, a sidewalk, a bike lane, a country road, a street in a town, an expressway, an air corridor, etc. As discussed above, each such feature has one or more attributes that are characteristic of respective modes of transport. The velocity determined in the second step 104 can be used to double-check, or to unambiguously determine, the specific mode of transport. For example, if the feature indicates a route of transport, e.g., a railroad track, a footpath, a trail, a street, a sidewalk, a bike lane, an expressway, an air corridor, and the velocity has a direction that matches the orientation of the feature, then it may be assumed that the user is travelling along the route of transport indicated by the first feature on the first map. Each of these routes has one or more attributes characteristic of the one or more modes of transport that are typically associated with the route of transport. In case there are multiple modes of transport associated with the transport route, the velocity determined in the second step 104 may then identify the specific one among the multiple modes of transport that is applicable to the user whose mobile electronic device is being monitored.

In a sixth step 112, a specific one of multiple modes of transport is determined under control of the geographic location determined in the first step 102 and the velocity determined in the second step 104. For example, if it has been determined in the fifth step 110, that the geographic location of the user coincides with a particular railroad track, and that the velocity of the user has a direction parallel to the railroad tracks at the geographic location and a magnitude that is typical of a passenger train at the stretch passing the geographic location, it is assumed that the user is travelling on a passenger train. The current train schedule, kept up-to-date with respect to currently occurring delays, may be consulted at a server of the railroad service provider, in order to identify the specific train, e.g., a particular long-distance train or a regional commuter train. As another example, if it has been determined in the fifth step 110, that the geographic location of the user coincides with a particular hiking trail, and that the velocity of the user has a direction parallel to the particular hiking trail at the geographic location and a magnitude that is typical of a hiker, it is assumed that the user is travelling along the particular hiking trail on foot.

In a seventh step 114, a specific one of multiple services is selected in dependence on the specific mode of transport determined in the sixth step 112.

In an eight step 116, the service is provided to the mobile electronic device via the mobile network.

For example, if it has been determined in the sixth step 112 that the user is travelling on a specific passenger train, a service is selected that enables this user to view a graph (an abstract representation) of the part of the railroad network that lies ahead, e.g., the train stations and the tracks interconnecting pairs of these train stations in the geographic area towards which the user is travelling. The graph is rendered in the graphical user-interface of his/her mobile telephone. The graph is interactive in that the user is enabled to select a particular train station in the graph via the user-interface, e.g., via a touch screen or via an alphanumeric identifier of the particular train station. Upon selection of the particular train station, the service returns a schedule of departure times and arrival times of other trains that are scheduled to stop at that particular train station around the estimated time of arrival of the specific passenger train. Alternatively, or in addition, the service returns the schedule of buses that depart from that particular train station around the estimated time of arrival. The time of arrival can be estimated under control of the velocity determined in the second step 104. Alternatively, the selection of this service triggers that the velocity of the user is determined repeatedly in order to be able to predict more accurately the time of arrival.

As another example, if it has been determined in the sixth step 112 that the user is walking on a particular hiking trail, a service is selected that renders in the graphical user interface of the mobile telephone a menu from which the user may select, e.g., retrieving current information about the weather forecast applicable to the user's current geographic location, retrieving current information about warnings (e.g., flash floods, fire hazards, mudslides, dangerous animals, etc.) applicable to the current geographic region, retrieving information about the flora and fauna relevant to the user's current geographic location, retrieving information about distances to possible points of interest such as vantage points, resting places, camping sites, restaurants, free beers, etc.

If it has been determined in the third step 106 that the speed is zero, the process proceeds with a ninth step 118. In the ninth step 118, the user is requested via his/her mobile electronic device to enter the specific mode of transport currently applicable to him/her, e.g., via a menu of pre-determined options. After the user has entered the specific mode of transport in the ninth step 118, the process resumes with the eighth step 116, discussed above.

The determination of the geographic location is described above, under the first step 102, as being purely time-based. Alternatively, the points in time of determining the geographic location of the mobile telephone may be made dependent on criterions other than purely time-based. For example, the points in time to determine the geographic location of the mobile telephone are made dependent on the velocity determined in a previous iteration of the process. It may not be needed to determine the geographic location of a slower traveler, e.g., a pedestrian, as frequently as that of a faster traveler, e.g., a car driver. The pedestrian covers a shorter distance per fixed time period than the car driver. The faster traveler may then require that a more frequent update of the geographic location be made in view of the type of service provided. As another example, the frequency of updating the geographic location is made dependent on the mode of transport determined in a previous iteration of the process. Consider a scenario wherein the mode of transport of a user of the mobile electronic device has been identified as riding on an intercity train. The scheduled time of arrival of this intercity train at the next station is known in advance. The intercity train may incur a delay, but the intercity train will typically not arrive at the next station ahead of the scheduled arrival time. Accordingly, it may therefore be assumed that the user will stay onboard the intercity train at least until the scheduled time of arrival at the next station. The determining of the next geographic location of the user's mobile electronic device may therefore be postponed until just before the scheduled time of arrival of the intercity at the next station.

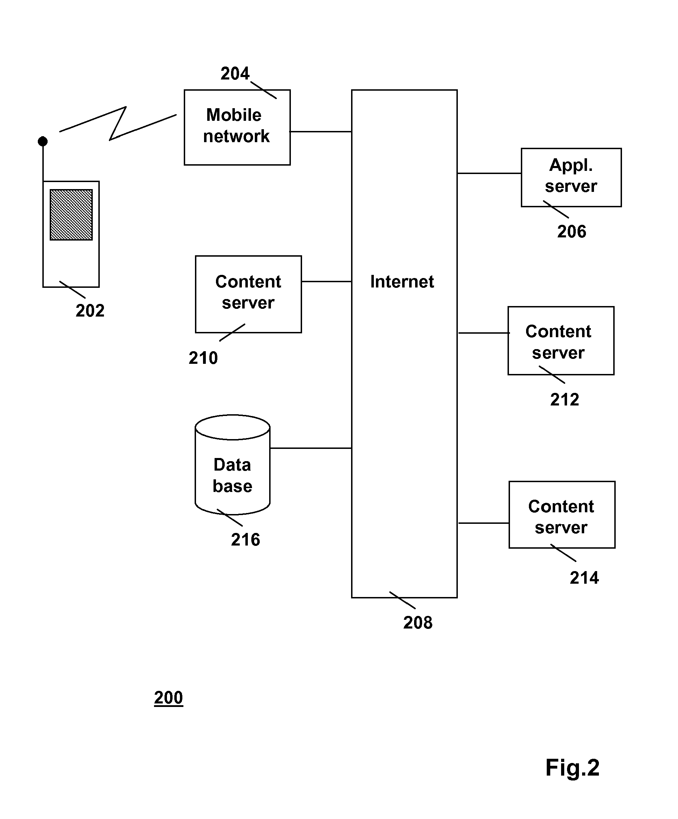

Fig.2 is a diagram of an example of a system 200 exploiting the method of the invention. The system 200 comprises a mobile electronic device 202, a mobile network 204, an application server 206, a data network 208 such as the Internet, a first content server 210, a second content server 212, a third content server 214, and a database 216. The mobile electronic device 202 comprises a mobile communication device (not shown) or mobile communication functionality. The mobile communication device then has a network interface (not shown) to the mobile network 204. The application server 206 runs the process discussed with reference to the diagram 100 of Fig.1. The mobile network 204 is connected, via the Internet 208, to the application server 206. The application server 206 is connected, via the Internet 208, to the first content server 210, the second content server 212, the third content server 214, and to the database 216. Alternatively, the database 216 is connected to the application server 206 via a private data network (not shown), or is accommodated at the application server 206.

In the system 200, the application server 206 receives, or otherwise determines, data indicative of the current geographic location of the mobile electronic device 202 and, optionally, data indicative of the current velocity of the mobile electronic device 202. If the application server 206 determines the data indicative of a rapid succession of time-stamped geographic locations of the mobile electronic device 202, the application server 206 can determine the velocity of the mobile electronic device 202 by means of determining a rate of change of the geographic location. The application server 206 receives this data from, e.g., the operator of the mobile network 204. Alternatively, the mobile electronic device 202 itself has GPS functionality onboard (not shown) and communicates this data, representative of the current geographic location and the current velocity, via the mobile network 204 to the application server 206. Alternatively, the application server 206 itself polls the geographic location of the mobile electronic device 202 via a localization procedure, known in the art, that uses the base stations of the mobile network 204. The application server 206 determines a first map of a geographic region that contains the current geographic location of the mobile electronic device 202. The application server 206 then attempts to match the current geographic location, or a sequence of the most recent geographic locations of the mobile electronic device 202, with a distinguishing first feature of the first map. The distinguishing first feature is characteristic of the expected mode of transport used by the user of the mobile electronic device 202 in view of the current geographic location and velocity: a specific railroad track, a specific country road, a specific hiking trail, a specific expressway or interstate, a sidewalk of a specific street, etc.

Each specific one of multiple modes of transport is associated with a specific one of multiple transport services provided by, or via, the application server 206. In each specific one of the transport services, the application server 206 retrieves specific information from specific sources, here the first content server 210, the second content server 212 and the third content server 214, and supplies this information to the mobile electronic device 202 via the mobile network 204.

For example, assume that the application server 206 has determined that the user of the mobile electronic device 202 is travelling in an automobile on the Autobahn in Germany in a southern direction and that the user is approaching a specific city. The application server 206 now selects a service that is relevant to this user in view of the applicable specific mode of transport (automobile), the time of the day, his/her current geographic location, and the speed of travelling. For this specific user, the following information may be relevant: the density of the traffic ahead; the weather conditions for the geographic region wherein the user is travelling; the geographic locations of the gas stations, restaurants, resting areas, the geographic locations of speed traps, toll booths, etc., ahead. In order to obtain information about the traffic ahead, the application server 206 contacts the first content server 210 of a traffic operator. The first content server 210 maintains an up-to-the-minute database of traffic information for the geographic region to which the user is currently travelling. In order to acquire information about the local or regional weather conditions, the application server 206 contacts the second content server 212 of a meteorological service provider. The second server 210 maintains an up-to-the-minute overview of the weather conditions for the geographic region to which the user is currently travelling. In order to obtain information of possibly relevant gas stations, rest areas and restaurants at which the user may want to stop, the application server 206 contacts the third content server 212 of an automobile association. The third contact server 214 maintains an up-to-date database of gas stations that are open, of restaurants that are open, and of rest areas that are open in the geographic region to which the user is travelling. The application server 206 collects this information from the first content server 210, the second content server 212 and the third content server 214, sends this information as data to the mobile electronic device 202 via the Internet 208 and the mobile network 204, and causes this information to be presented to the user via the mobile electronic device 202 for example, via a menu of categories of options in the user interface (not shown here) of the mobile communication device 202. It goes without saying that this user is operating the electronic device 202 hands-free.

Optionally, the user may have registered his/her user profile with the provider of the transport services. The user profile comprises for this specific user, e.g., his/her personal fields of interest (electric guitars; inventing; micro-breweries; water polo and orthopedic aids), his/her professional fields of interest (inventing; managing; technical developments at the frontier of data electronic); etc. The user profile is stored in the database 216. The user profile may have been characterized by selected ones of pre-determined keywords. The application server 206 now can also scan additional content servers (not shown) of tourist bureaus or local tourist agencies for current events that have been scheduled for today in the geographic area wherein the user is travelling and that are likely of interest to this particular user given his/her user-profile.

As another example, assume that the application server 206 has determined that the user of the mobile electronic device 202 is travelling on a specific passenger train, currently travelling from a city A towards a city B. The application server 206 now selects a service that is relevant to this user in view of the applicable specific mode of transport (railway), the time of the day, his/her current geographic location, and the speed of travelling. For this specific user, the following information may be relevant: the estimated time of arrival at the next train stations ahead; the platforms and estimated times of departure of other trains at these next train stations around the time of the estimated arrival of the user's train; the scheduled departure times of the buses at the bus stations near the next train stations; restaurants at, or in the vicinity of, the next train stations, etc. In order to obtain information about the estimated time of arrival of the user's train at each of the next train stations, and information about the platforms and departure times of other trains at each of the next train stations, the application server 206 contacts the first content server 210 of the railroad operator. The first content server 210 maintains a dynamically updated overview of the estimated arrival times and departure times of the trains at each of the next train stations. In order to obtain information about the bus services at each of the next train stations, the application server 206 contacts the second content server 212 of the bus operator. In order to obtain information about restaurants at, or in the vicinity of, the next train stations, the application server 206 contacts the third content server 214 of a tourist agency or of a local business community or of the local yellow pages facility. If the user has registered his/her user profile at the database 216 of the application server 206, the application server 206 may scan other content servers (not shown) for news about events currently taking place near the next train stations. The application server 206 gathers this information and communicates this information via the mobile network 204 to the mobile electronic device 202. The mobile electronic device 202 presents this information, e.g., in a menu with selectable options, via the user interface (not shown) of the mobile electronic device 202.

As yet another example, assume that the application server 206 has determined that the user of the mobile electronic device 202 is walking along a hiking trail in the hills. The application server 206 now selects a service that is relevant to this user in view of the applicable specific mode of transport (on foot), the time of the day, his/her current geographic location, and the speed of travelling. For this user, the following information may be relevant: the local weather forecast; warnings issued by the local park ranger; distances from the user's current location to different points of interest. In order to obtain information about the local weather, the application server contacts the first content server 210 of a local weather station that issues up-to-the-minute overviews of the local weather conditions and weather forecasts. In order to obtain currently outstanding warnings issued by the park service for the geographic area, wherein the user is hiking, the application server 206 contacts the second content server 212 of the local park service. In order to obtain information about local points of interest, the application server 206 contacts the second content server 212 and/or the third content server 214 of the National Geographic Society (NGS). The NGS is one of the largest non-profit scientific and educational institutions in the world. The application server 206 gathers this information and communicates this information via the Internet 208 and the mobile network 204 to the mobile electronic device 202. The mobile electronic device 202 presents this information, e.g., in a menu with selectable options, via the user interface (not shown) of the mobile electronic device 202.

As still another example, consider a so-called buddy finder service. The expression "buddy finder" is used within a telecommunications context and refers to a specific social networking service. The service is provided to registered users of electronic communication equipment, such as mobile telephones and network-enabled palmtop computers, etc. The service alerts a first user to the fact that a second user, who is listed with the service as a buddy of the first user, is currently located within a pre-determined distance from the geographic location of the first user. The service determines the geographic locations of a mobile communication device based on, e.g., identifying in which cell the mobile communication device is currently located, based on the location of the base station of the mobile telephone network that receives the strongest signal from the mobile device, or on triangulation of the signals from the device received at multiple base stations.

If a person "A" has registered with the buddy finder service, data representative of the geographical location of the mobile telephone of person "A" is uploaded to a server. At the server, the data can be used to alert another person "B", e.g., registered with the service as allowed by person "A" to be alerted, to the current geographic location of person "A". The alerting then uses, e.g., the mobile phone or other mobile, network enabled computing device of person "B". The relevant geographic location can be indicated as a certain mark in a geographic map rendered at the mobile telephone of person "B". The alerting may be made conditional depending on the magnitude of the distance between the geographic locations determined for persons "A" and "B". For some general background on buddy finder services and technologies, please see, e.g., US patent application publication 20020183052; Japanese patent application publication JP 2003-153522; European patent application publication 1 691 565.

Assume now that the application server 206 has determined that the user of the mobile electronic device 202 is onboard a specific passenger train, currently travelling from a city A towards a city B. Assume that another user of another mobile electronic device (not shown) has been registered as a buddy to the user of the mobile electronic device 202. Assume that the mode of transport of this other user has been determined as driving a car on an expressway in a certain direction. Further assume that, if the first user and the other user proceed with their traveling, they will be within the pre-determined distance from one another, within which the user will receive an alert to the presence of the other user from the buddy finder service, in about twenty minutes. Accordingly, the geographic location of the mobile electronic device of the user and the other geographic location of the other mobile electronic device of the other user may start to be polled again in about twenty minutes for the purpose of the buddy finder service.

In the system 200 discussed above, the application server 206 serves as a broker between, on the one hand, the mobile electronic device 202 and, on the other hand, the first content server 210, the second content server 212 and the third content server 214. The broker selects, under control of the specific mode of transport of the user, which content servers to contact in order to acquire information that is relevant to this user in view of his/her current specific mode of transport. The broker then communicates this information via the Internet 208 and the mobile network 204 to the mobile electronic device 202. The mobile electronic device 202 presents this information to the user, e.g., in a menu with selectable options, via the user interface (not shown) of the mobile electronic device 202.

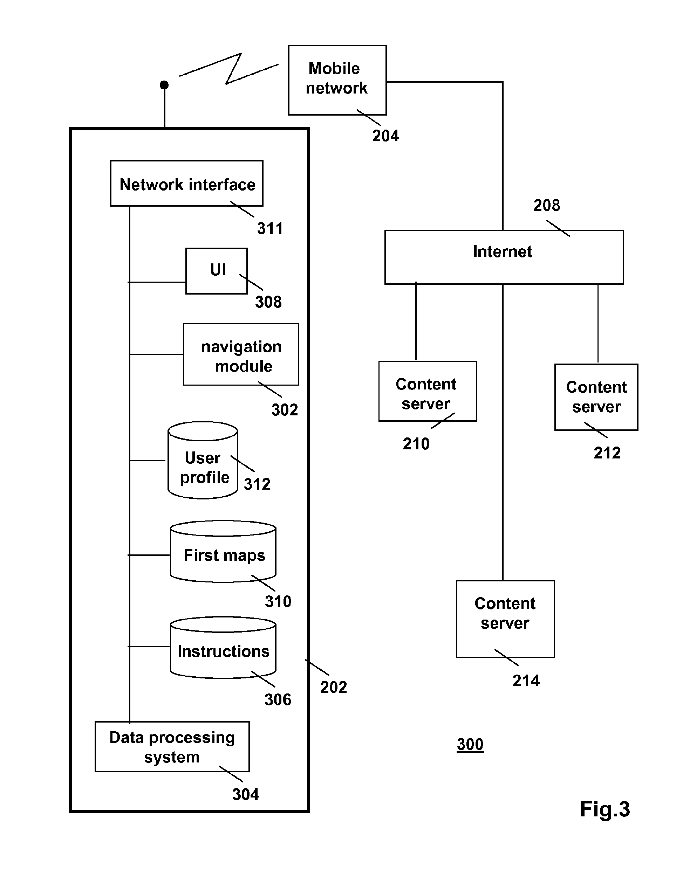

Reference is now had to Fig.3 of an example of a system 300 exploiting the method of the invention. In the system 300, the mobile electronic device 202 is equipped with an onboard navigation module 302 that is configured for determining the current geographic location of the mobile electronic device 202 and the current rate of change of the geographic location of the mobile electronic device 202. For example, the onboard navigation module comprises a GPS module. The mobile electronic device 202 also comprises a data processing system 304, a program memory 306 with multiple sets of instructions that can be executed by the data processing system 302, and a user-interface 308 that is configured for enabling user interaction with the mobile electronic device 202. The user-interface 308 comprises, for example, a display monitor, a touch screen, a microphone, a loudspeaker, and a keyboard. The mobile electronic device 202 also has a storage 310 that stores one or more first geographic maps. The mobile electronic device 202 further comprises a mobile communication device or mobile communication functionality (not shown separately) with a network interface 311 for communicating with the mobile network 204.

The user may selectively set the mobile electronic device 302 in a navigation mode in order to activate the onboard navigation module 302. The onboard navigation module 302 communicates navigational data to the data processing system 304. The navigational data is representative of the current geographic location of the mobile electronic device 202 and of its velocity. The data processing system 304 retrieves a particular set of instructions from the program memory 306 for selecting, from the storage 310, a particular one of the first geographic maps that matches the current geographic location of the mobile electronic device 202. The data processing system 202 then determines, under control of the particular set of instructions, a first feature in the particular first map that is characteristic of the current specific mode of transport. As mentioned earlier, the one or more attributes of the first feature, the current geographic location and direction of the velocity enable to determine the specific mode of transport: driving on an expressway, riding on a train on a particular railroad track, walking along a hiking trail, strolling along a shopping street, etc.

Once the data processing system 202 has determined the current specific mode of transport, the data processing system 304 retrieves another set of instructions from the program memory 306 under control of the specific mode of transport just determined.

The other set of instructions is configured for determining which one or more specific ones of the first content server 210, the second content server 212 and the third content server 214 are to be contacted, via the network interface 311, the mobile network 204 and the Internet 208, and for retrieval, via the mobile network, of information relevant to the user of the mobile electronic device 202 in view of the specific mode of transport. Optionally, the other set of instructions is configured for taking into account, in contacting the one or more specific ones of the first content server 210, the second content server 212 and the third content server 214, a user profile stored in a further memory 312 of the mobile electronic device 202, in order to select which one or more specific ones of the first content server 210, the second content server 212 and the third content server 214 are to be contacted, or which pages provided by any of the content servers 210-214, in order to obtain further relevant information that matches the user profile in view of the specific mode of transport.

Alternatively, the other set of instructions is configured for submitting data to a pre-determined one of the first content server 210, the second content server 212 and the third content server 214, the data being representative of the specific mode of transport determined by the data processing system 304. The pre-determined one of the first content server 210, the second content server 212 and the third content server 214 then provides to the mobile electronic device 202, via the Internet 208, the mobile network 204 and the network interface 311, relevant information with respect to the specific mode of transport. That is, the same one of the first content server 210, the second content server 212 and the third content server 214 supplies the information relevant to the specific mode of transport, whether the specific mode of transport is, e.g., driving a car or riding on a train.

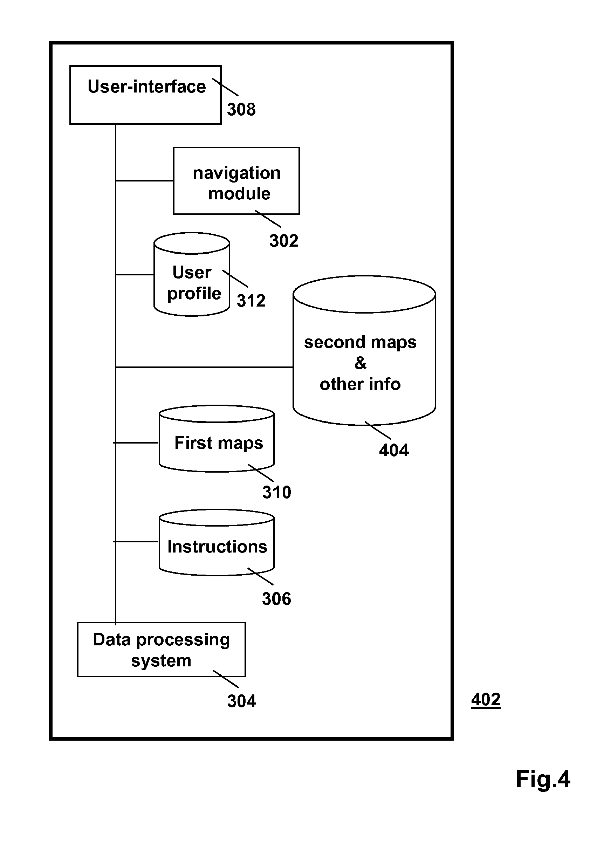

Reference is now had to Fig.4. Fig.4 is a diagram of a mobile electronic device 402, e.g., a handheld personal navigation device. 6. The mobile electronic device 402 comprises: the navigation module 302; the data processing system 304; the program memory 306 storing the plurality of sets of instructions; the graphical user interface 308; and the storage 310 storing one or more first geographic maps, discussed above. Optionally, the mobile electronic device 402 comprises the further memory 312 storing the user profile of the user of the mobile electronic device 402, as discussed above. The mobile electronic device 402 also comprises an information storage 404 connected to the data processing system 304. The information storage 404 stores collections of information items. Each particular one of the collections of information items is relevant to a particular mode of transport. For example, a first collection is relevant to the mode of transport being travelling on foot. The first collection then comprises hiking maps of certain geographic areas, particular background information relevant to hiking in a particular one of the geographic areas such as vantage points, points of interests, information about the local flora and fauna, etc. A second collection is relevant to the mode of transport being driving a car. The second collection then comprises road maps of certain geographic areas, particular background information relevant to driving in a particular geographic area, such as the locations of gas stations, restaurants, points of interests, conditions of the roads at certain seasons, etc. A third collection is relevant to the mode of transport being travelling by train. The third collection then comprises maps of the railroad network in certain geographic areas, time tables of train arrivals and departures per train station in a particular geographic area, availability of bus services at the train stations, restaurants in the vicinity of the train stations, etc.

The navigation module 302 determines the geographic location of the mobile electronic device 402 and the data processing system determines the velocity of the mobile electronic device 402 based on the rate of change of the geographic location determined by the navigation module 302. Alternatively, the navigation module 302 determines the geographic location of the mobile electronic device 402, as well as the velocity of the mobile electronic device 402. The data processing system 304 determines, under control of the geographic location and the velocity and using a relevant one of the first maps in the storage 310, a specific one of multiple modes of transport, being currently used by a user of the mobile electronic device 402. When the specific mode of transport has been determined, the data processing system 304 selects a specific one of the plurality of sets of instructions from the program memory 306 and in dependence on the specific mode of transport. The data processing system 304 executes the specific set of instructions. Execution of the specific set of instructions controls retrieving from the information storage 404 data being representative of information relevant to the user in view of the specific mode of transport. The execution also controls the providing of the information to the user via the user interface 308. The user interface comprises, e.g., a display monitor for displaying the information retrieved. For example, the information retrieved from the information storage 404 comprises a relevant one of the second maps for being displayed to the user. In an embodiment of the mobile electronic device 402, the information storage 404 does not need to comprise the second maps. Instead, the relevant one of the first maps in the storage 310 is used for being displayed. Preferably, all features not relevant to the specific mode of transport have been filtered out, and the scale and resolution of the first map as displayed is adapted to the specific mode of transport.

Thus, the mobile electronic device 402 is self-sufficient with respect to providing information to the user relevant to the current specific mode of transport. It may be desirable to frequently update the information, held in the information storage 404. For this reason, the mobile electronic device 402 is then, for example, connected to a dedicated server (not shown) of a service provider, e.g., via the user's network-enabled personal computer (not shown) at home, in order to receive updates regarding information relevant to individual ones of the modes of transport, and for storing this information in the information storage 404.

An alternative embodiment of the mobile electronic device 402 (not shown) comprises a mobile communication device (not shown) with the network interface 311 to the mobile network 204, but lacks the navigation module 302. Now, the alternative embodiment of the mobile electronic device 402 may be configured for receiving from an external source (not shown), e.g., the operator of the mobile network 204, data representative of the current geographic location and the velocity of the alternative embodiment of the mobile electronic device 402. That is, instead of having the onboard navigation module 302, the alternative embodiment of the mobile electronic device 402 relies on the external source for determining the current geographic location and the velocity.

## Claims

1. A method (100) of determining a specific one of multiple modes of transport used by a user of a mobile electronic device (202) while travelling, wherein the method comprises:
determining (102) a geographic location of the mobile electronic device;
determining (104) a velocity of the mobile electronic device associated with the geographic location; and
identifying (112) the specific mode of transport under control of the geographic location and the velocity.

2. The method of claim 1, wherein the identifying of the specific mode of transport comprises:
determining (108) a first map of a geographic region that contains the geographic location; and
associating (110) the geographic location and the velocity with a particular one of a plurality of first features on the first map, the particular first feature having an attribute being characteristic of the specific mode of transport.

3. A mobile electronic device (202; 402) comprising:
a navigation module (302) configured for determining (102; 104) a geographic location of the mobile electronic device;
a data processing system (304) connected to the navigation module and configured for determining a velocity of the mobile electronic device associated with the geographic location, and for determining (112), under control of the geographic location and the velocity, a specific one of multiple modes of transport being used by a user of the mobile electronic device.

4. The mobile electronic device of claim 3, wherein:
the mobile electronic device comprises a memory for storing data representative of a first map of a geographic region containing the geographic location;
the memory is connected to the data processing system;
the determining of the specific mode of transport comprises:
accessing the first map; and
associating (110) the geographic location and the velocity with a particular one of a plurality of first features on the first map, the particular first feature having an attribute being characteristic of the specific mode of transport.

5. The mobile electronic device of claim 3, wherein:
the mobile electronic device has a mobile communication device with an interface (311) to a mobile network (204);
the interface is connected to the data processing system;
the determining of the specific mode of transport comprises:
submitting to a server via the mobile network a request for returning to the mobile electronic device data representative of the specific mode of transport, the request comprising further data representative of the geographic location and of the velocity.

6. Control software on a computer-readable medium, the control software being configured for being installed on a mobile electronic device (202), wherein:
the mobile electronic device comprises:
a navigation module (302) configured for determining (102; 104) a geographic location of the mobile electronic device; and
a data processing system (304) connected to the navigation module;
the control software has first instructions that, when executed on the data processing system, is operative to control determining a velocity of the mobile electronic device associated with the geographic location, and determining (112), under control of the geographic location and the velocity, a specific one of multiple modes of transport, being used by a user of the mobile electronic device;

7. The control software of claim 6, comprising:
second instructions for control of determining (108) a first map of a geographic region that contains the geographic location; and
third instructions for control of associating (110) the geographic location and the velocity with a particular one of a plurality of first features on the first map, the particular first feature having an attribute being characteristic of the specific mode of transport.

8. The control software of claim 6, wherein:
the mobile electronic device has a mobile communication device with an interface (311) to a mobile network (204);
the interface is connected to the data processing system;
the control software comprises fourth instructions for control of submitting to a server via the mobile network a request for returning to the mobile electronic device and via the mobile network, data representative of the specific mode of transport, the request comprising further data representative of the geographic location and of the velocity.

9. Control-software on a computer-readable medium, the control software being configured for installing on a server (206) to implement a method (100) of determining a specific one of multiple modes of transport used by a user of a mobile electronic device (202) while travelling, the control software comprises:
first instructions for determining (102) a geographic location of the mobile electronic device;
second instructions for determining (104) a velocity of the mobile electronic device associated with the geographic location; and
third instructions for identifying (112) the specific mode of transport under control of the geographic location and the velocity.

10. The control software of claim 8, wherein the third instructions comprise:
fourth instructions for accessing (108) a first map of a geographic region that contains the geographic location; and
fifth instructions for associating (110) the geographic location and the velocity with a particular one of a plurality of first features on the first map, the particular first feature having an attribute being characteristic of the specific mode of transport.
